# EUROPÄISCHE PATENTSCHRIFT

(11) **EP 3 431 368 B1**
(45) Veröffentlichungstag und Bekanntmachung des Hinweises auf die Patenterteilung: **27.05.2020**
(21) Anmeldenummer: 18178210.3
(22) Anmeldetag: 18.06.2018
(51) Int. Cl.: B62D 15/02, B60W 30/06

(54) **VERFAHREN UND KRAFTFAHRZEUG ZUR PARKFLÄCHENOPTIMIERUNG**
METHOD AND MOTOR VEHICLE FOR OPTIMIZING PARK SURFACES
PROCÉDÉ ET VÉHICULE AUTOMOBILE PERMETTANT L'OPTIMISATION DE LA SURFACE DE STATIONNEMENT

(30) Priorität: 17.07.2017 DE 102017212162
(43) Veröffentlichungstag der Anmeldung: 23.01.2019
(73) Patentinhaber: Ford Global Technologies, LLC, Dearborn, MI 48126 (US)
(72) Erfinder: Zenner, Thomas, 52351 Düren (DE); Hammoud, Mazen, Ann Arbor, MI 48104 (US)
(74) Vertreter: Dörfler, Thomas

(56) Entgegenhaltungen:
- WO-A1-2016/120118
- DE-A1-102013 222 071
- US-A1- 2015 039 213
- US-A1- 2015 149 022

## Beschreibung

Die Erfindung betrifft ein Verfahren zur Parkflächenoptimierung durch dynamische Reduzierung von Zwischenräumen zwischen Kraftfahrzeugen, die auf einer vorgegebenen Parkfläche geparkt sind, durch automatisches Bewegen der Fahrzeuge mittels Antrieb, Bremsen und Lenkung, sowie ein entsprechendes Kraftfahrzeug gemäß den Oberbegriffen der unabhängigen Patentansprüche.

Ein derartiges Verfahren ist aus der US 2015/149022 A1 bekannt. Die US 2015/149022 A1 ist als nächstliegender Stand der Technik nach dem Oberbegriff des Anspruchs 1 zu sehen.

Die DE 10 2012 215 218 A1 offenbart ein Verfahren zur Parkflächenoptimierung durch dynamische Reduzierung von Zwischenräumen zwischen Kraftfahrzeugen, die auf einer vorgegebenen Parkfläche geparkt sind, durch automatisches Bewegen der Fahrzeuge. Dieses Verfahren eignet sich für automatisches Ein- und Ausparken in und aus Einzelreihen von Fahrzeugen, indem schon geparkte Fahrzeuge weiter zusammen rücken und so eine neue Parklücke frei machen. Das Verfahren wird von der zentralen Überwachungseinrichtung geleitet, die mit einem eine Parklücke suchenden Fahrzeug und mit geparkten Fahrzeugen kommuniziert, so dass vor Ort eine aufwändige Infrastruktur bereitgestellt werden muss.

Die DE 10 2013 221 274 A1 und die DE 10 2009 057 647 A1 offenbaren Verfahren zur Vergrößerung von Parklücken in einer Reihe von in Längsrichtung hintereinander geparkten Fahrzeugen, indem ein Fahrzeug mit Ein- oder Ausparkwunsch geparkte Fahrzeuge über Funkschnittstellen leitet, autonom ein Stück vor- oder zurückzufahren, so dass eine Parklücke dazwischen vergrößert wird. Das heißt, das ein- oder ausparkende Fahrzeug steht in einer sog. Master-Slave-Beziehung zu den anderen Fahrzeugen, wobei das ein- oder ausparkende Fahrzeug immer als ein Master-Fahrzeug fungiert. Die Master-Slave-Beziehung endet mit dem Ein- oder Ausparkvorgang.

Der Erfindung liegt die Aufgabe zu Grunde, die Flächenausnutzung von größeren Parkflächen zu optimieren, wie sie in Städten, in Einkaufszentren und bei Veranstaltungen wie z. B. Sportveranstaltungen oder Festivals zur Verfügung stehen. Diese Aufgabe wird gemäß der Erfindung durch ein Verfahren und ein Kraftfahrzeug mit den Merkmalen der unabhängigen Patentansprüche gelöst.

Vorteilhafte Weiterbildungen der Erfindung sind in den abhängigen Patentansprüchen angegeben.

Gemäß der Erfindung wird das Verfahren nur für solche Fahrzeuge durchgeführt, die dafür eingerichtet sind, unmittelbar miteinander zu kommunizieren. Außerdem wird das Verfahren auf Parkflächen durchgeführt, die ohne irgendwelche Hindernisse durchgehend befahrbar sind und die viele Fahrzeuge neben- und hintereinander aufnehmen können.

Jedes Fahrzeug weist ein Master-Steuersystem und ein Slave-Steuersystem auf, von denen in jedem auf der Parkfläche befindlichen Fahrzeug immer nur eines aktiv ist, wobei zwischen den auf der Parkfläche befindlichen Fahrzeugen eine Master-Slave-Beziehung derart besteht, dass ein Bordrechner genau eines der Fahrzeuge, welches als ein Master-Fahrzeug fungiert, einen Leitrechner für die Bordrechner aller anderen Fahrzeuge bildet, welche als Slave-Fahrzeuge fungieren.

Das Master-Steuersystem leitet die Slave-Steuersysteme, einerseits Ein- und Ausparkvorgänge einzelner Fahrzeuge und andererseits das automatische Bewegen von geparkten Kraftfahrzeugen zwecks Parkraumoptimierung durchzuführen. Derartige Bewegungen von geparkten Kraftfahrzeugen werden reihenweise durchgeführt, und zwischen Reihen von geparkten Fahrzeugen wird mindestens ein Zugangskorridor variabler Lage und Breite freigehalten.

Mit dem erfindungsgemäßen Verfahren wird eine Parkfläche für viele neben- und hintereinander parkende Fahrzeuge insgesamt optimal ausgenutzt, während die o. g. bekannten Verfahren nur lokale Parkflächenoptimierungen ermöglichen.

Die Parkfläche ist vorzugsweise dafür bemessen, Fahrzeuge in mehr als drei Reihen von jeweils mehr als drei Fahrzeugen aufzunehmen, wobei der oder jeder Zugangskorridor eine der oder den daran angrenzenden Reihen Fahrzeuge entsprechende Länge hat.

In einer bevorzugten Ausführungsform wird der oder jeder Zugangskorridor mit zunehmender Belegung der Parkfläche durch reihenweise Verschiebung von geparkten Fahrzeugen schmaler gemacht und/oder verschoben, wobei er bis zu einer Mindestbreite von vorzugsweise zwei oder eineinhalb Fahrzeuglängen verschmälert werden kann, wobei unter einer Fahrzeuglänge hier insbesondere ein für PKW typischer Wert von z. B. 5 Meter verstanden wird.

Durch derartige Verringerungen der Anzahl und Breite der Zugangskorridore kann die Parkfläche weitaus dichter als durch bekannte automatische Parkflächenoptimierungsverfahren mit Fahrzeugen belegt werden.

Erfindungsgemäß wird die Anzahl der Zugangskorridore mit zunehmender Belegung der Parkfläche auf weniger als die halbe Anzahl der aktuell mit Fahrzeugen belegten Fahrzeugreihen vermindert, also auf weniger als bei gewöhnlichen Parkflächen, die für je zwei Reihen Fahrzeuge einen Zugangskorridor benötigen. Das maximale Aufnahmevermögen der Parkfläche kann erreicht werden, indem die Anzahl der Zugangskorridore auf einen einzigen relativ schmalen Zugangskorridor vermindert wird.

Bei der Erfindung werden die Fahrzeuge wesentlich dichter neben- und hintereinander geparkt als es für allseitigen Zugang durch Personen üblicherweise erforderlich ist.

Die Parkfläche sollte für Fahrzeuge reserviert sein, die zur Durchführung des Verfahrens eingerichtet sind.

Wenn das Fahrzeug, welches aktuell das Master-Fahrzeug ist, die Parkfläche verlässt, weil es sein Benutzer angefordert hat, kann es die Rolle des Master-Fahrzeugs an ein beliebiges anderes auf der Parkfläche geparktes Fahrzeug übergeben. Alternativ oder unabhängig vom Verlassen der Parkfläche kann das Master-Fahrzeug seine Rolle in Abhängigkeit von einem Zeitrang eingegebener oder geschätzter Abholzeiten und/oder Ankunftszeiten der anderen Fahrzeuge an ein anderes auf der Parkfläche geparktes Fahrzeug übergeben.

Es folgt eine Beschreibung von Ausführungsbeispielen anhand der Zeichnungen. Darin zeigen:
Fig. 1 das Einparken auf einer mit vielen Kraftfahrzeugen dicht belegten Parkfläche;
Fig. 2 das Abholen eines Fahrzeugs von einer dicht belegten Parkfläche;
Fig. 3 eine Skizze zur Veranschaulichung der Mindestbreite eines Zugangskorridors;
Fig. 4 eine Strategie zum Auffüllen der Parkfläche;
Fig. 5 die Aufteilung eines Steuersystems in ein Master-Steuersystem und viele Slave-Steuersysteme;
Fig. 6 mögliche Ein- und Ausgangssignale des Master-Steuersystems;
Fig. 7 mögliche Ein- und Ausgangssignale des Slave-Steuersystems;
Fig. 8 eine Einparksequenz; und
Fig. 9 eine Fahrzeugabholsequenz.

Eine Optimierung von Parkraum ermöglichen kooperierende autonome Kraftfahrzeuge, indem die Parkdichte maximiert und der zur Verfügung stehende Parkraum maximal genutzt wird. Dazu werden die Distanzen der Fahrzeuge auf einer Parkfläche sowohl seitlich als auch in Längsrichtung minimiert, und Zugangskorridore werden mit zunehmender Belegung sukzessive vermindert und verkleinert.

Voraussetzung dafür ist, dass die Kraftfahrzeuge autonom fahren können, in dem Sinne, dass sie mindestens automatisch vorwärts und rückwärts ein- und ausparken und rangieren können. Zu diesem Zweck verfügen die Fahrzeuge über Bordrechner, verschiedene Sensoren zur Gewinnung von 2D- oder 3D-Daten der Fahrzeugumgebung, z. B. Ultraschallsensoren, Kameras oder andere optische Sensoren wie z. B. Lasersensoren, Radarsensoren usw., Satellitennavigation wie z. B. GPS zur Bestimmung der Distanz zu umgebenden Fahrzeugen und der Position innerhalb der Parkfläche, sowie über Aktuatoren, die ein selbständiges Manövrieren der Fahrzeuge ermöglichen, insbesondere mittels Antrieb, Bremsen und Lenkung unter Wahrung von Sicherheitsdistanzen zu benachbarten Fahrzeugen.

Außerdem müssen die Kraftfahrzeuge unmittelbar miteinander kommunizieren können, z. B. über Mobilfunknetze oder eine andere Art von Fahrzeug-zu-Fahrzeug-Kommunikation, und der zu optimierende Parkraum muss eine für derartige autonom fahrende Kraftfahrzeuge reservierte Parkfläche sein.

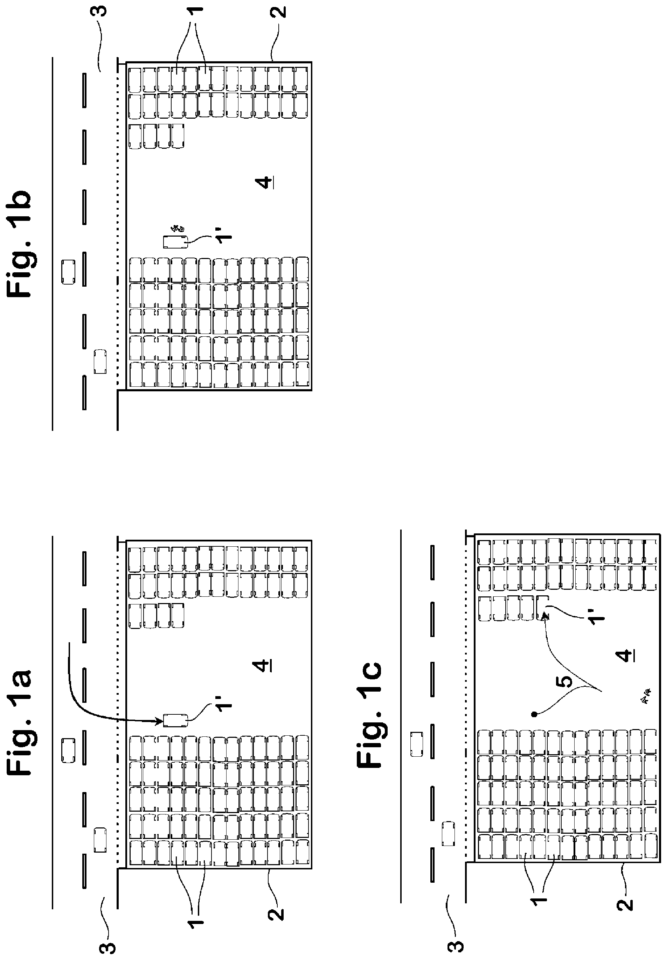

In Fig. 1a bis 1c sind viele derartige Fahrzeuge 1 in einer zweidimensionalen Matrix auf einer im Ausführungsbeispiel rechteckigen Parkfläche 2 geparkt, die ohne irgendwelche Hindernisse durchgehend befahrbar ist. Nebeneinander geparkte Fahrzeuge werden hier als eine Reihe bezeichnet.

In diesem Ausführungsbeispiel sind die Zellen der Matrix, welche jeweils eine Parkbucht bilden, nachfolgend Parkplatz genannt, alle gleich groß und nur wenig größer als das größte Fahrzeug, das für die Parkfläche 2 zulässig ist, doch könnten z. B. unterschiedlich breite und/oder lange Fahrzeuge in unterschiedlichen Reihen mit jeweils passenden Zellengrößen geparkt werden. Bei einer so erzielten dichten Anordnung ist jedenfalls zwischen den Fahrzeugen kein Ein- oder Aussteigen oder Beladen mehr möglich. Diese Anordnung ähnelt jener, wie sie z. B. bei der Verschiffung von Kraftfahrzeugen üblich ist, wofür sich das hier beschriebene Verfahren ebenfalls eignet.

Um die seitlichen Abstände der Fahrzeuge 1 möglichst klein halten zu können, geschieht das Ein- oder Aussteigen von Fahrzeuginsassen innerhalb eines oder mehrerer Zugangskorridore 4, wie sie auch bei gewöhnlichen Parkflächen vorgesehen sind, oder auch außerhalb der rechteckigen Parkfläche 2, z. B. wenn diese nicht wie im Ausführungsbeispiel direkt an einer befahrenen Straße 3 liegt.

Nachdem ein Fahrzeug 1' von der Straße 3 in einen freien Zugangskorridor 4 der Parkfläche 2 eingefahren ist und angehalten hat und nachdem die Fahrzeuginsassen das Fahrzeug 1' verlassen haben und sich davon weg bewegt haben, rangiert das Fahrzeug 1' entlang geeigneter Trajektorien 5 autonom in eine freie Zelle der Parkfläche 2, wie in Figuren 1a bis 1c veranschaulicht.

Gewöhnliche Parkflächen, auf denen Fahrzeuge unter der Steuerung von menschlichen Fahrern ein- und ausparken, benötigen für je zwei Reihen Fahrzeuge einen Zugangskorridor. Mit dem hierin beschriebenen Verfahren und Steuersystem für kooperierende autonome Kraftfahrzeuge werden jedoch weniger Zugangskorridore benötigt, in dem Belegungsbeispiel von Fig. 1a bis 1c sogar nur ein einziger Zugangskorridor 4, so dass die zur Verfügung stehende Parkfläche 2 optimal ausgenutzt wird.

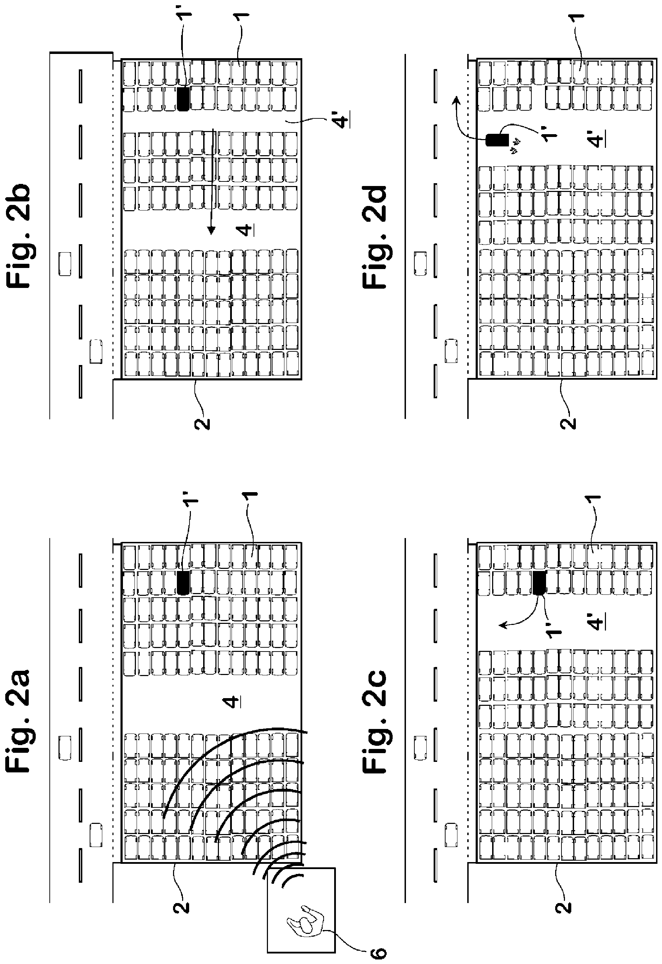

In Fig. 2a ist die in Fig. 1a bis 1c gezeigte Parkfläche 2 bis auf einen einzigen Zugangskorridor 4 von ungefähr zwei Fahrzeuglängen Breite mit Fahrzeugen 1 vollgeparkt. Wenn ein Fahrzeugbenutzer 6 sein in Fig. 2a bis 2d schwarz markiertes Fahrzeug 1' kommen lassen möchte, das in Fig. 2a ringsum von anderen Fahrzeugen 1 blockiert ist, sendet er mittels einer Fernbedienung wie z. B. einem Zündschlüssel oder einem Smartphone ein Rufsignal an sein Fahrzeug 1'.

Daraufhin übernimmt ein Rechner mit geeigneter Software in dem Fahrzeug 1' oder alternativ in irgendeinem der anderen Fahrzeuge 1 die Funktion eines Leitrechners für alle anderen Fahrzeuge 1, 1' auf der Parkfläche 2 und lässt die das Fahrzeug 1' blockierenden Reihen Fahrzeuge 1 nach Art von beweglichen Bibliothek-Regalen in Richtung auf den Zugangskorridor 4 vorrücken, wie in Fig. 2b mit einem Pfeil veranschaulicht, und den Zugangskorridor 4 schließen, wie in Fig. 2c gezeigt, womit ein neuer Zugangskorridor 4' von ungefähr zwei Fahrzeuglängen Breite entsteht, über den das Fahrzeug 1' ausparken, Insassen aufnehmen und die Parkfläche 2 verlassen kann, wie in Fig. 2d gezeigt.

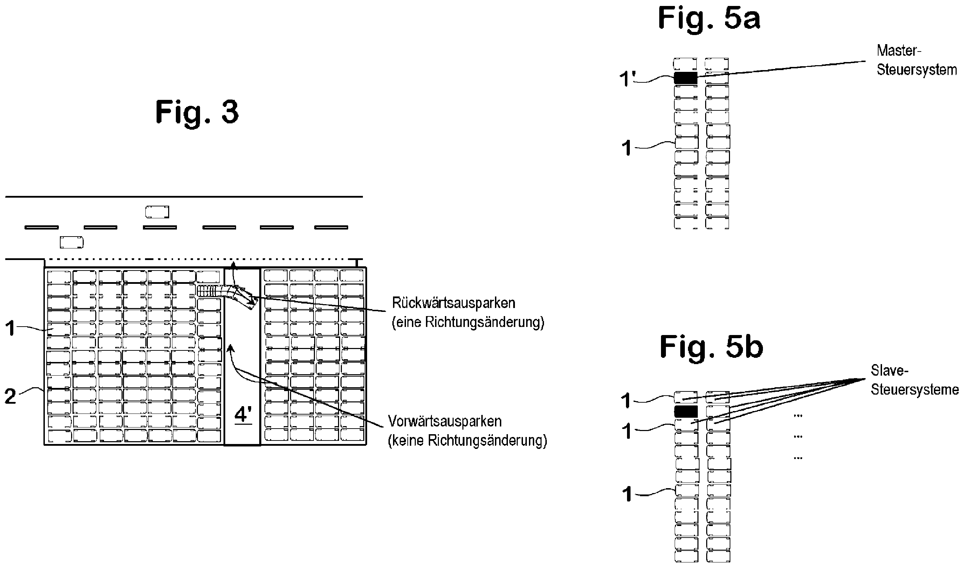

Der Zugangskorridor 4 kann auch noch etwas schmaler sein als in Fig. 2 gezeigt. Wie in Fig. 3 veranschaulicht, genügt ein ungefähr anderthalb Fahrzeuglängen breiter Zugangskorridor 4', damit die daran angrenzenden Fahrzeuge entweder ohne Richtungsänderung oder mit maximal einer Richtungsänderung ein- und ausparken können, wobei die Fahrzeuge natürlich über die entsprechende Rangierfähigkeiten verfügen müssen. Werden mehr Richtungsänderungen zugelassen, kann der Zugangskorridor 4' noch schmaler sein. Doch sollte so etwas die Ausnahme für Fälle maximaler Belegung sein.

Die der Parkflächenbelegung zu Grunde liegende Strategie strebt danach, mindestens einen Zugangskorridor von mindestens ungefähr eineinhalb oder zwei Fahrzeuglängen frei zu halten. Dies ermöglicht es, alle Fahrzeuge rückwärts einparken und vorwärts ausparken zu lassen und außerdem genügend Platz zum Aus- und Einsteigen frei zu lassen. Dadurch kann einem Benutzer, der sein Fahrzeug wiederbekommen will, sein Fahrzeug möglichst schnell wieder bereitgestellt werden, und zwar in einer Position, in der alle Türen problemlos geöffnet werden können.

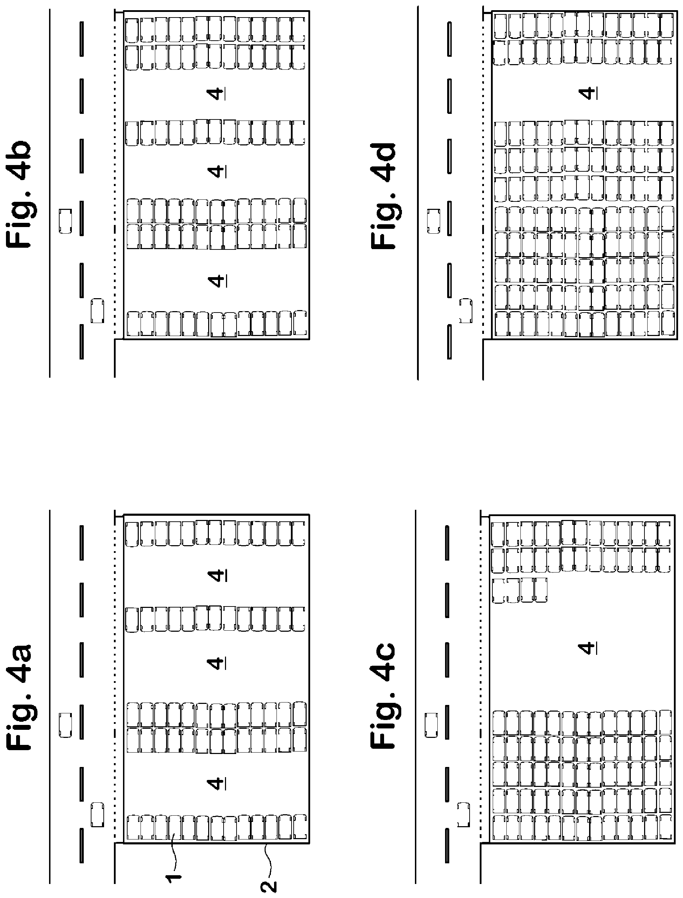

Eine zweckmäßige Strategie für das Auffüllen der Parkfläche 2 mit Fahrzeugen 1 ist in Fig. 4a-4d veranschaulicht.

Wie in Fig. 4a gezeigt, werden zunächst ähnlich wie bei gewöhnlichen Parkflächen Fahrzeuge 1 in Einzel- oder Doppelreihen einparken gelassen, zwischen denen jeweils ein Zugangskorridor 4 liegt, wobei jedoch die Zugangskorridore 4 keine feste Breite haben, sondern tendenziell so breit wie möglich gehalten werden.

Wie in Fig. 4b gezeigt, werden die Zugangskorridore 4 mit zunehmender Zahl von Fahrzeugen 1 schmaler gemacht, indem die Einzel- oder Doppelreihen Fahrzeuge 1 dazwischen sukzessive verschoben werden, wobei jedoch die Zahl der Rangiervorgänge dahingehend begrenzt wird, dass dafür nicht zu viel Energie aufgewendet wird. Das heißt, Verschiebungen werden erst dann durchgeführt, wenn es im Sinne eines bequemen und schnellen Ein- und Ausparkens sinnvoll ist. Doch da Kraftfahrzeuge mit Fähigkeiten zu autonomem Fahren in der Regel rangieren können, ohne einen Verbrennungsmotor starten zu müssen, können auch kleinere Verschiebungen energiesparend durchgeführt werden.

Wenn die Zugangskorridore 4 mit zunehmender Zahl von Fahrzeugen 1 so schmal werden, dass keine Einzel- oder Doppelreihen von Fahrzeugen 1 mehr aufrechterhalten werden können, welche durch Zugangskorridore 4 mit der gewählten Mindestbreite getrennt sind, wird die Zahl der Zugangskorridore 4 sukzessive vermindert, bis es nur noch einen einzigen breiten Zugangskorridor 4 gibt, wie in Fig. 4c gezeigt, und dieser breite Zugangskorridor 4 wird dann sukzessive ebenfalls zugeparkt, bis bei Maximalbelegung nur noch ein Zugangskorridor 4 mit der gewählten Mindestbreite vorhanden ist, wie in Fig. 4d gezeigt.

Es folgt eine Beschreibung der Architektur eines Steuersystems zur Durchführung der oben beschriebenen Parkflächenoptimierung.

Jedes Fahrzeug 1 enthält einen Rechner mit entsprechender Software, und alle Fahrzeuge und deren Rechner können miteinander kommunizieren. In höchstens einem Fahrzeug 1' unter den Fahrzeugen 1 auf der Parkfläche arbeitet die Software so, dass dieser Rechner als ein Leitrechner oder sog. Master-Rechner für alle anderen Fahrzeuge 1 auf der Parkfläche 2 arbeitet, deren Rechner somit als sog. Slave-Rechner arbeiten, die von dem Leitrechner leitgesteuert werden, um die oben beschriebene Parkflächenoptimierung durchzuführen.

Das Steuersystem umfasst somit ein Master-Steuersystem im Fahrzeug 1' und viele Slave-Steuersysteme in den Fahrzeugen 1, wie in Fig. 5 veranschaulicht.

Das Master-Steuersystem ist ein Software-Modul, das in allen Fahrzeugen 1 mit der Fähigkeit zu autonomem Ein- und Ausparken und der Erlaubnis zur Nutzung der Parkfläche 2 vorhanden ist, das aber nur in maximal einem Fahrzeug aktiv ist, welches nachfolgend das Master-Fahrzeug genannt wird.

Sobald das Master-Fahrzeug die Parkfläche verlässt, übergibt es die Rolle des Masters an ein anderes Fahrzeug, welches dann das neue Master-Fahrzeug wird.

Jedes Slave-Steuersystem ist ein Software-Modul, das in allen Fahrzeugen vorhanden ist und das in allen Fahrzeugen aktiv ist, die aktuell nicht das Master-Fahrzeug sind und die nachfolgend Slave-Fahrzeuge genannt werden.

Das Master-Steuersystem kommuniziert mit den Slave-Steuersystemen und übermittelt Positionsdaten, die vorzugsweise durch Satellitennavigation wie z. B. GPS gewonnen werden, von allen und an alle Fahrzeuge.

Das Master-Steuersystem verarbeitet Anforderungen, Fahrzeuge auf der Parkfläche zu parken oder davon abzuholen, weist Fahrzeugen, die geparkt werden sollen, Plätze zu und übermittelt Platzzuweisungen sowie die Positionen aller anderen auf der Parkfläche vorhandenen Fahrzeuge an die anfordernden Fahrzeuge.

Das Master-Steuersystem plant Bewegungen der Fahrzeuge, insbesondere die oben beschriebenen reihenweisen Verschiebungen, wobei sie Bewegungsanforderungen an alle Fahrzeuge übermittelt, die dazu verschoben werden müssen.

Bevor ein Fahrzeug von außen auf die Parkfläche fährt, wird sein Slave-Steuersystem aktiv und sucht ein gerade aktives Master-Steuersystem, indem es eine Erreichbarkeitsanfrage sendet, ein sog. Ping.

Wird ein Master-Steuersystem erkannt, wird dies dem Benutzer des einfahrenden Fahrzeugs mitgeteilt, welcher dann mittels einer Smartphone-App oder anderen Methode bewirken kann, dass das Slave-Steuersystem eine Park-Anforderung an das Master-Steuersystem sendet.

Das Slave-Steuersystem empfängt von dem Master-Steuersystem Positionsdaten des ihm zugewiesenen Parkplatzes und eines ihm zur Verfügung gestellten Zugangskorridors und steuert das Fahrzeug auf den zugewiesenen Parkplatz, wobei es Bewegungsanforderungen vom Master-Steuersystem empfängt.

Nötigenfalls sendet das Master-Steuersystem außerdem Bewegungsanforderungen an die Slave-Steuersysteme von schon geparkten Fahrzeugen, um Reihenverschiebungen durchzuführen.

Benutzer, die schon wissen, wann sie wieder wegfahren möchten, haben bei der Ankunft die Möglichkeit oder werden aufgefordert, eine geschätzte Abholzeit anzugeben. Dies ermöglicht es dem Master-Fahrzeug, ankommende Fahrzeuge so einzuparken, dass Fahrzeuge mit ähnlichen Abholzeiten in gleichen Reihen stehen, was eine schnellere Abholung ermöglicht.

Jemand, der sein Fahrzeug abholen möchte, sendet mittels einer Fernbedienung wie z. B. einem Zündschlüssel oder einem Smartphone ein Rufsignal an sein Fahrzeug. Dieses ermittelt das gerade aktive Master-Fahrzeug und sendet eine Abhol-Anforderung an das Master-Steuersystem, welches das abzuholende Fahrzeug auf die in Figuren 2a bis 2d gezeigte Weise bereitstellt, d. h. unter Verwendung von Reihenverschiebungen.

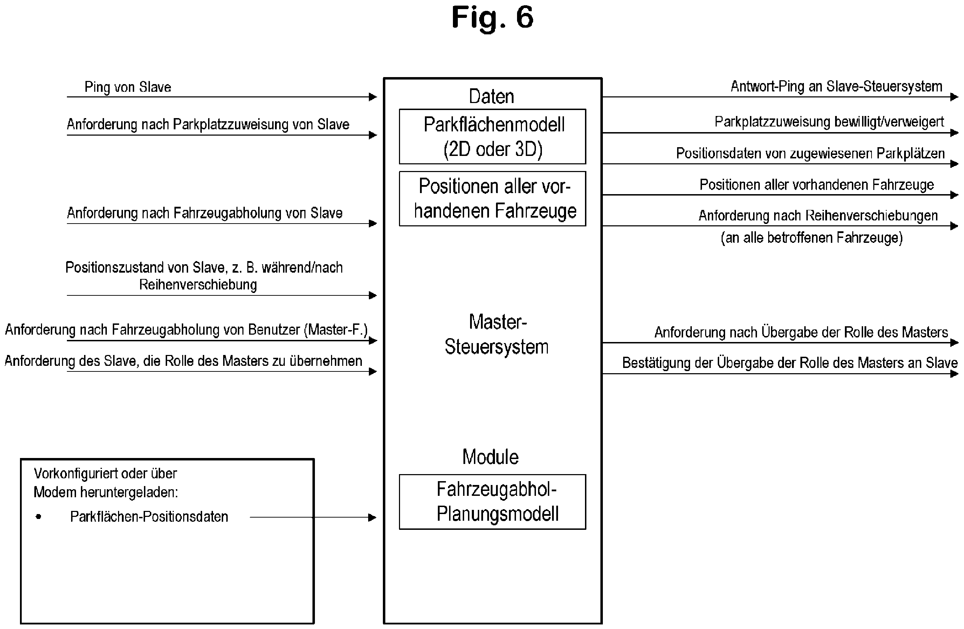

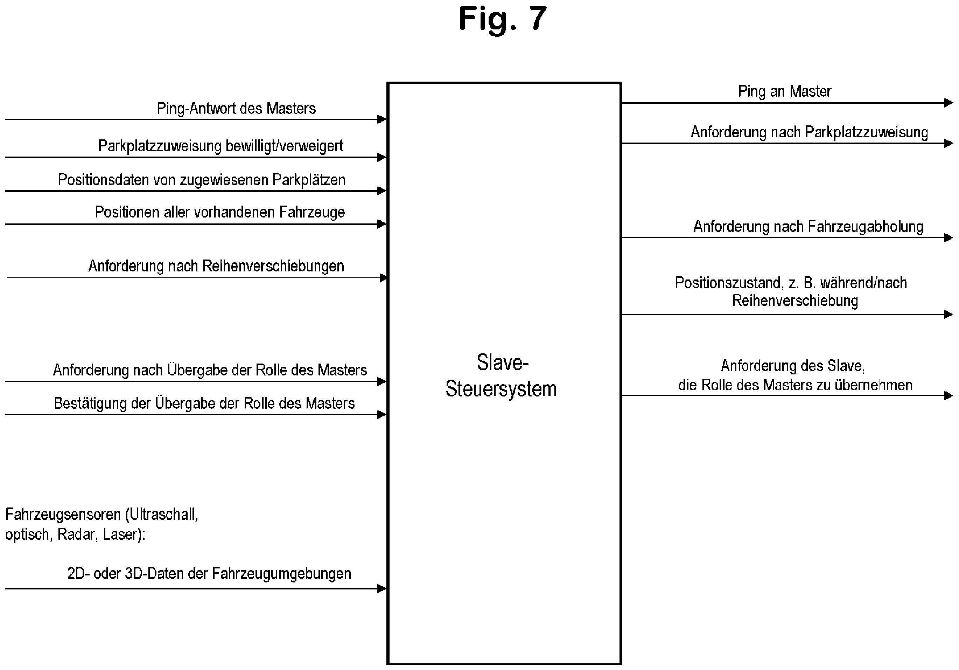

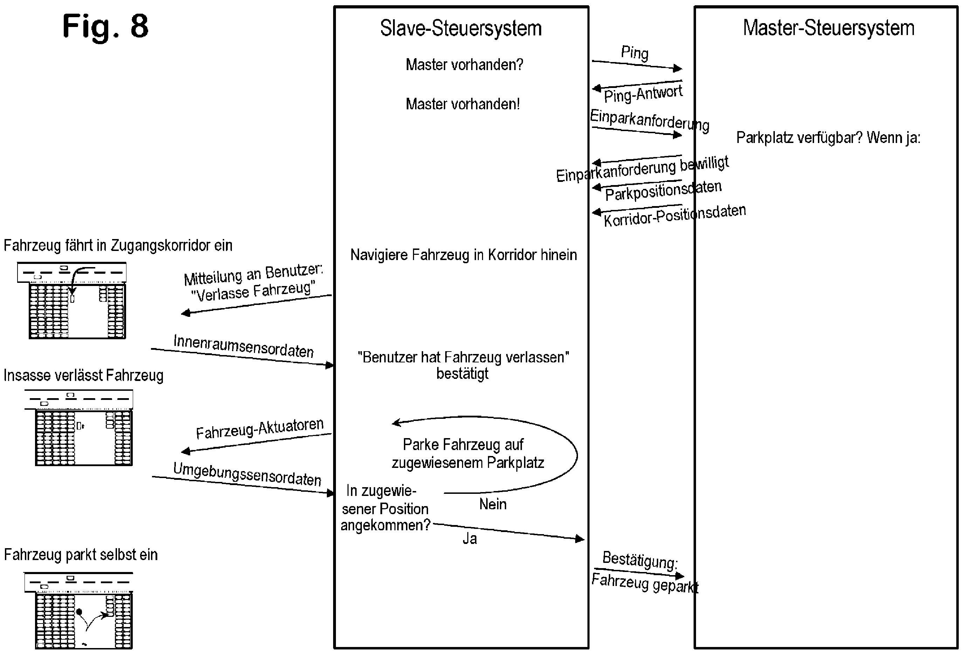

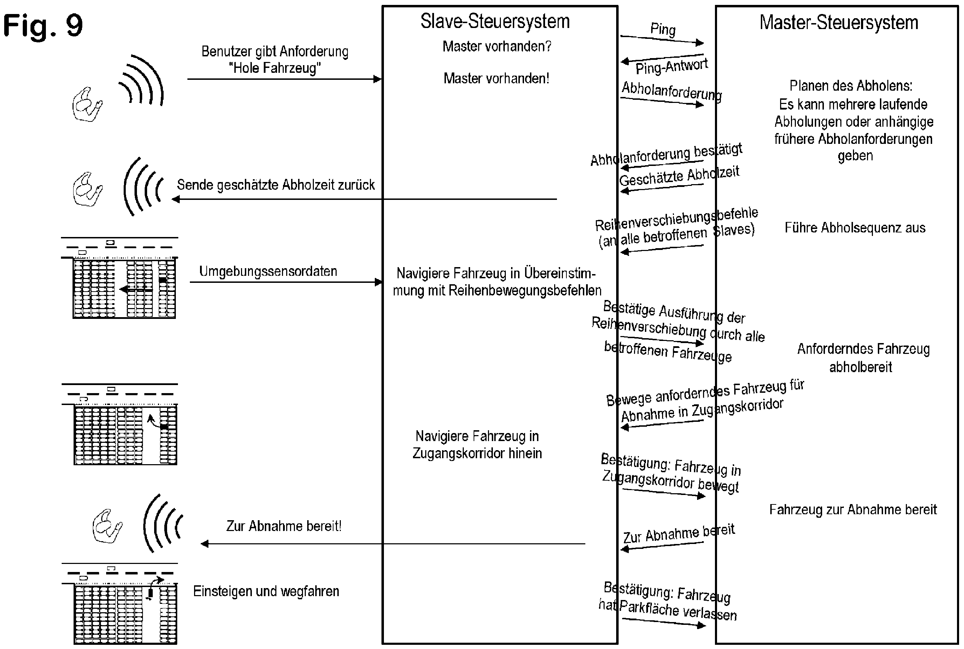

Fig. 6 veranschaulicht mögliche Ein- und Ausgangssignale des Master-Steuersystems, Fig. 7 veranschaulicht mögliche Ein- und Ausgangssignale des Slave-Steuersystems, Fig. 8 veranschaulicht eine Einparksequenz, und Fig. 9 veranschaulicht eine Fahrzeugabholsequenz.

In Übereinstimmung mit Figuren 6 bis 9 wird ein kooperatives Steuersystem für autonom ein- und ausparkende Fahrzeuge offenbart, in dem jedes Fahrzeug die Fähigkeit besitzt, entweder die Rolle des Master-Steuersystems oder eines Slave-Steuersystems zu übernehmen. Immer nur ein Fahrzeug spielt die Rolle des Masters.

Eine geeignete Strategie, welches Fahrzeug das Master-Fahrzeug ist, besteht z. B. darin, dass das erste auf der Parkfläche ankommende Fahrzeug das Master-Fahrzeug wird und diese Rolle an irgendein anderes Fahrzeug übergibt, wenn es die Parkfläche verlässt. In einem anderen Beispiel übergibt das Master-Fahrzeug die Rolle des Masters immer an das Fahrzeug mit der zeitlich am nächsten liegenden oder am weitesten entfernten geschätzten oder eingegebenen Abholzeit. In noch einem anderen Beispiel übergibt das Master-Fahrzeug die Rolle des Masters immer an das zuerst oder zuletzt geparkte Fahrzeug. Einhergehend mit der Übergabe der Master-Rolle sind natürlich auch alle dafür benötigten Daten zu übergeben.

Umgekehrt ist es auch möglich, dass ein auf der Parkfläche befindliches Fahrzeug die Rolle des Masters von dem aktuellen Master-Fahrzeug verlangt und daraufhin übergeben bekommt. Zum Beispiel wird das in Fig. 2a von anderen Fahrzeugen 1 blockierte Fahrzeug 1' in der Regel nicht das aktuelle Master-Fahrzeug sein, und es könnte die Rolle des Masters übernehmen, um die nötigen Reihenverschiebungen selbst zu leiten.

## Patentansprüche

1. Verfahren zur Parkflächenoptimierung durch dynamische Reduzierung von Zwischenräumen zwischen Kraftfahrzeugen (1, 1'), die auf einer vorgegebenen Parkfläche (2) geparkt sind, durch automatisches Bewegen der Fahrzeuge (1, 1') mittels Antrieb, Bremsen und Lenkung, wobei
- das Verfahren nur für solche Fahrzeuge (1, 1') durchgeführt wird, die dafür eingerichtet sind, unmittelbar miteinander zu kommunizieren;
- die Parkfläche (2) ohne irgendwelche Hindernisse durchgehend befahrbar ist und bemessen ist, viele Fahrzeuge (1, 1') neben- und hintereinander aufzunehmen;
- jedes Fahrzeug (1, 1') ein Master-Steuersystem und ein Slave-Steuersystem aufweist, von denen in jedem auf der Parkfläche (2) befindlichen Fahrzeug (1, 1') immer nur eines aktiv ist, wobei zwischen den auf der Parkfläche (2) befindlichen Fahrzeugen (1, 1') eine Master-Slave-Beziehung derart besteht, dass ein Bordrechner genau eines der Fahrzeuge, welches als ein Master-Fahrzeug fungiert, einen Leitrechner für Bordrechner aller anderen Fahrzeuge bildet, welche als Slave-Fahrzeuge fungieren; und
- das Master-Steuersystem die Slave-Steuersysteme leitet, sowohl Ein- und Ausparkvorgänge einzelner Fahrzeuge (1') als auch das automatische Bewegen von geparkten Kraftfahrzeugen (1) zwecks Parkraumoptimierung durchzuführen, wobei Bewegungen von geparkten Kraftfahrzeugen (1) reihenweise durchgeführt werden und wobei zwischen Reihen von geparkten Fahrzeugen (1) mindestens ein Zugangskorridor (4, 4') variabler Lage und Breite freigehalten wird;
**dadurch gekennzeichnet, dass**
die Anzahl der Zugangskorridore (4, 4') mit zunehmender Belegung der Parkfläche (2) auf weniger als die halbe Anzahl der aktuell durch Fahrzeuge (1, 1') gebildeten Fahrzeugreihen vermindert wird.

2. Verfahren nach Anspruch 1,
**dadurch gekennzeichnet, dass**
die Parkfläche (2) bemessen ist, Fahrzeuge (1, 1') in mehr als drei Reihen von jeweils mehr als drei Fahrzeugen aufzunehmen, und dass der oder jeder Zugangskorridor (4, 4') eine der oder den daran angrenzenden Reihen Fahrzeuge (1, 1') entsprechende Länge hat.

3. Verfahren nach Anspruch 1 oder 2,
**dadurch gekennzeichnet, dass**
der oder jeder Zugangskorridor (4, 4') eine Mindestbreite von zwei oder eineinhalb Fahrzeuglängen hat.

4. Verfahren nach einem der vorhergehenden Ansprüche,
**dadurch gekennzeichnet, dass**
der oder jeder Zugangskorridor (4, 4') mit zunehmender Belegung der Parkfläche (2) durch reihenweise Verschiebung von geparkten Fahrzeugen (1, 1') schmaler gemacht und/oder verschoben wird.

5. Verfahren nach einem der vorhergehenden Ansprüche,
**dadurch gekennzeichnet, dass**
alle Fahrzeuge (1) dichter neben- und hintereinander geparkt werden als für allseitigen Zugang durch Personen normalerweise erforderlich.

6. Verfahren nach einem der vorhergehenden Ansprüche,
**dadurch gekennzeichnet, dass**
die Parkfläche (2) für zur Durchführung des Verfahrens eingerichtete Fahrzeuge (1, 1') reserviert ist.

7. Verfahren nach einem der vorhergehenden Ansprüche,
**dadurch gekennzeichnet, dass**
ein die Parkfläche (2) verlassendes Master-Fahrzeug (1') die Rolle des Master-Fahrzeugs an ein beliebiges anderes auf der Parkfläche geparktes Fahrzeug (1) übergibt.

8. Verfahren nach einem der vorhergehenden Ansprüche,
**dadurch gekennzeichnet, dass**
ein Master-Fahrzeug (1') die Rolle des Master-Fahrzeugs in Abhängigkeit von einem Zeitrang eingegebener oder geschätzter Abholzeiten und/oder Ankunftszeiten der anderen Fahrzeuge (1) an ein anderes auf der Parkfläche geparktes Fahrzeug (1) übergibt.

9. Kraftfahrzeug,
**dadurch gekennzeichnet, dass**
das Kraftfahrzeug dafür eingerichtet ist, das Verfahren nach einem der vorhergehenden Ansprüche durchzuführen.

## Claims

1. Method for optimizing parking areas by dynamically reducing intermediate spaces between motor vehicles (1, 1') which are parked on a specified parking area (2), by automatically moving the vehicles (1, 1') by means of a drive, brakes and steering system, wherein
- the method is carried out only for vehicles (1, 1') which are configured to communicate directly with one another;
- the parking area (2) can be driven on continuously without any obstacles and is dimensioned to accommodate a large number of vehicles (1, 1') next to one another and behind one another;
- each vehicle (1, 1') has a master control system and a slave control system, of which only one is ever active in each vehicle (1, 1') which is located on the parking area (2), wherein there is a master-slave relationship between the vehicles (1, 1') located on the parking area (2) such that an on-board computer of precisely one of the vehicles, which functions as a master vehicle, forms a master computer for on-board computers of all the other vehicles, which function as slave vehicles; and
- the master control system commands the slave control systems to carry out both parking procedures and procedures for moving out of parking spaces, of individual vehicles (1'), as well as the automatic movement of parked motor vehicles (1) for the purpose of optimizing parking space, wherein movements of parked vehicles (1) are carried out on the basis of rows, and wherein at least one access corridor (4, 4') of a variable position and width between rows of parked vehicles (1) is kept free;
**characterized in that**
as the parking area (2) becomes increasingly occupied, the number of access corridors (4, 4') is reduced to fewer than half the number of vehicle rows which are currently formed by vehicles (1, 1').

2. Method according to Claim 1,
**characterized in that**
the parking area (2) is dimensioned to accommodate vehicles (1, 1') in more than three rows of more than three vehicles each, and **in that** the or each access corridor (4, 4') has a length corresponding to the adjoining row or rows of vehicles (1, 1').

3. Method according to Claim 1 or 2,
**characterized in that**
the or each access corridor (4, 4') has a minimum width of two or one and a half vehicle lengths.

4. Method according to one of the preceding claims, **characterized in that**
as the parking area (2) is increasingly occupied, the or each access corridor (4, 4') is made narrower and/or displaced by displacing parked vehicles (1, 1') on the basis of rows.

5. Method according to one of the preceding claims, **characterized in that**
all the vehicles (1) are parked more closely next to one another and behind one another than is normally necessary for access on all sides by persons.

6. Method according to one of the preceding claims, **characterized in that**
the parking area (2) is reserved for vehicles (1, 1') which are configured to carry out the method.

7. Method according to one of the preceding claims, **characterized in that**
a master vehicle (1') which exits the parking area (2) hands over the role of the master vehicle to any other vehicle (1) which is parked on the parking area.

8. Method according to one of the preceding claims, **characterized in that**
a master vehicle (1') hands over the role of master vehicle to another vehicle (1) parked on the parking area, as a function of a chronological priority of input or estimated pick-up times and/or arrival times of the other vehicles (1).

9. Motor vehicle,
**characterized in that**
the motor vehicle is configured to carry out the method according to one of the preceding claims.

## Revendications

1. Procédé d'optimisation des aires de stationnement par réduction dynamique des espaces intermédiaires entre les véhicules automobiles (1, 1') qui sont stationnés sur une aire de stationnement (2) prédéfinie, par déplacement automatique des véhicules (1, 1') au moyen de l'entraînement, du freinage et de la direction,
- le procédé n'étant mis en œuvre que pour les véhicules (1, 1') qui sont conçus pour communiquer directement les uns avec les autres ;
- l'aire de stationnement (2) pouvant être parcourue en continu sans aucun obstacle et étant dimensionnés pour accueillir de nombreux véhicules (1, 1') les uns à côté des autres et les uns derrière les autres ;
- chaque véhicule (1, 1') possédant un système de commande maître et un système de commande esclave, parmi lesquels un seul est actif à la fois dans chaque véhicule (1, 1') qui se trouve sur l'aire de stationnement (2), une relation maître-esclave entre les véhicules (1, 1') qui se trouvent sur l'aire de stationnement (2) étant établie de telle sorte qu'un ordinateur de bord d'exactement un véhicule qui fait office de véhicule maître forme un ordinateur pilote pour les ordinateurs de bord de tous les autres véhicules qui font office de véhicules esclaves ; et
- le système de commande maître dirige les systèmes de commande esclaves pour accomplir à la fois des opérations d'entrée en stationnement et de sortie de stationnement des véhicules (1') individuels ainsi que le déplacement automatique des véhicules automobiles stationnés (1) à des fins d'optimisation de l'espace de stationnement, les mouvements des véhicules automobiles stationnés (1) étant effectués par rangées et au moins un corridor d'accès (4, 4') ayant une position et une largeur variables étant maintenu libre entre les rangées de véhicules stationnés (1) ;
**caractérisé en ce que**
le nombre de corridors d'accès (4, 4') étant réduit à mesure que l'occupation de l'aire de stationnement (2) augmente à moins de la moitié du nombre de rangées de véhicules actuellement formées par les véhicules (1, 1') .

2. Procédé selon la revendication 1, **caractérisé en ce que** l'aire de stationnement (2) est dimensionnée pour accueillir des véhicules (1, 1') dans plus de trois rangées comptant respectivement plus de trois véhicules, et **en ce que** le ou chaque corridor d'accès (4, 4') possède une longueur qui correspond à la ou aux rangées de véhicules (1, 1') qui lui sont limitrophe.

3. Procédé selon la revendication 1 ou 2, **caractérisé en ce que** le ou chaque corridor d'accès (4, 4') possède une largeur minimale égale à deux fois ou à une fois et demie les longueurs des véhicules.

4. Procédé selon l'une des revendications précédentes, **caractérisé en ce que** le ou chaque corridor d'accès (4, 4') est rendu plus étroit et/ou décalé à mesure de l'augmentation de l'occupation de l'aire de stationnement (2) par décalage rangée par rangée des véhicules (1, 1') stationnés.

5. Procédé selon l'une des revendications précédentes, **caractérisé en ce que** tous les véhicules (1) sont stationnés plus densément les uns à côté des autres et les uns derrière les autres que ce qui est normalement nécessaire pour un accès de tous les cotés par des personnes.

6. Procédé selon l'une des revendications précédentes, **caractérisé en ce que** l'aire de stationnement (2) est réservée aux véhicules (1, 1') qui sont conçus pour mettre en œuvre le procédé.

7. Procédé selon l'une des revendications précédentes, **caractérisé en ce qu'**un véhicule maître (1') qui quitte l'aire de stationnement (2) transfère le rôle de véhicule maître à un quelconque autre véhicule (1) stationné sur l'aire de stationnement.

8. Procédé selon l'une des revendications précédentes, **caractérisé en ce qu'**un véhicule maître (1') transfère le rôle de véhicule maître à un autre véhicule (1) stationné sur l'aire de stationnement en fonction d'une ancienneté d'un moment de récupération et/ou d'un moment d'arrivée saisi ou estimé des autres véhicules (1).

9. Véhicule automobile, **caractérisé en ce que** le véhicule automobile est conçu pour mettre en œuvre le procédé selon l'une des revendications précédentes.
